# EUROPÄISCHE PATENTSCHRIFT

(11) **EP 1 886 613 B1**
(45) Veröffentlichungstag und Bekanntmachung des Hinweises auf die Patenterteilung: **18.02.2009**
(21) Anmeldenummer: 07015339.0
(22) Anmeldetag: 06.08.2007
(51) Int. Cl.: A47L 9/32, B05B 7/00

(54) **Tragbares Sprühgerät**
Portable spray device
Pulvérisateur portable

(30) Priorität: 10.08.2006 DE 102006037459
(43) Veröffentlichungstag der Anmeldung: 13.02.2008
(73) Patentinhaber: Andreas Stihl AG & Co. KG, 71336 Waiblingen (DE)
(72) Erfinder: Müller, Matthias, 73630 Remshalden (DE); Stark, Thomas, 71336 Waiblingen (DE)
(74) Vertreter: Wasmuth, Rolf

(56) Entgegenhaltungen:
- WO-A-20/04072383
- JP-A- 58 003 659

## Beschreibung

Die Erfindung betrifft ein tragbares Sprühgerät mit den Merkmalen nach dem Oberbegriff des Anspruchs 1.

Das Dokument JP 58 00 3659 zeigt ein solches Spritzgerät.

Für den Pflanzenschutz oder dergleichen werden tragbare Sprühgeräte eingesetzt, mit denen ein Sprühmittel den Pflanzen zugeführt wird. Ein derartiges Sprühgerät weist ein Gebläse zur Förderung eines Blasluftstromes durch ein Blasrohr auf. Ein Verbrennungsmotor des Sprühgerätes treibt ein Gebläse an, welches den Blasluftstrom durch das Blasrohr treibt. In den Blasluftstrom mündet eine Sprühmittelleitung, die einen flüssigen Sprühmittelstrom aus einem Vorratsbehälter in den Blasluftstrom einleitet. Dabei wird das flüssige Sprühmittel zerstäubt und mit dem Blasluftstrom zu den zu behandelnden Pflanzen getragen.

Für den Startvorgang des Verbrennungsmotors wird das Sprühgerät auf dem Boden abgesetzt. Nachdem die erforderlichen Einstellungen des Vergasers vorgenommen sind, wird der Verbrennungsmotor angelassen. Im Betrieb wird das Sprühgerät beispielsweise mit einem Rückentragegestell auf dem Rücken des Benutzers getragen. Bei laufendem Motor beschränken sich Steuerungshandlungen des Benutzers darauf, die geeignete Motorleistung mit einem Gashebel zu wählen, den gewünschten Massenstrom des Sprühmittels einzustellen und das Blasrohr in die gewünschte Richtung zu halten.

Zur Ausrichtung des Blasrohres ist an diesem ein Handgriff angeordnet, der von der Hand des Benutzers umschlossen wird, und mit dem das Blasrohr geführt wird. Des Weiteren sind ein Gashebel zur Leistungssteuerung des Verbrennungsmotors, ein Stoppschalter zur Zündungsunterbrechung des Verbrennungsmotors sowie ein Betätigungselement zur Betätigung des Steuerungsventils für den Sprühmittelstrom vorgesehen.

Für ein dauerhaftes und ermüdungsfreies Arbeiten ist eine ergonomische Formgebung des Handgriffes erforderlich. Dieser kann deshalb eine gewisse Baugröße nicht überschreiten. Der Bauraum für Steuerelemente jedweder Art ist begrenzt. In vorbekannter Bauform werden deshalb nur der Gashebel und der Stoppschalter am Handgriff angeordnet. Weitere Steuerelemente wie Kaltstarteinrichtungen sind direkt am Vergaser angeordnet. Das Betätigungselement für das Steuerventil des Sprühmittelstromes ist direkt am Steuerventil angeordnet.

Zur Betätigung aller im Betrieb erforderlichen Funktionen ist entweder ein häufiges Umgreifen vom Handgriff zu den entsprechenden Betätigungselementen oder die Benutzug einer zweiten Hand erforderlich. Der Betrieb des Sprühgerätes ist umständlich.

Der Erfindung liegt die Aufgabe zugrunde, ein gattungsgemäßes tragbares Sprühgerät derart weiterzubilden, dass eine vereinfachte Handhabbarkeit möglich ist.

Diese Aufgabe wird durch ein tragbares Sprühgerät mit den Merkmalen des Anspruchs 1 gelöst.

Dazu wird vorgeschlagen, dass der insbesondere am Blasrohr befestigte Handgriff einen Griffkopf aufweist, in dem der Gashebel, der Stoppschalter und das Betätigungselement für das Steuerventil angeordnet sind. Der Griffkopf ragt in Richtung des freien Endes vom Handgriff über den Griffbereich hervor und wird nicht von der Hand umschlossen. Der Griffbereich kann dementsprechend schlank und ergonomisch geformt sein. Der darüber hinausstehende Griffkopf kann großvolumiger ausgeführt sein und bietet Platz für den Gashebel, den Stoppschalter und das Betätigungselement für das Steuerventil, ohne die Handlichkeit des Handgriffes einzuschränken. Alle drei Bedienelemente sind dennoch mit der Hand erreichbar, während diese den Griffbereich des Handgriffes umschließt. Zur Betätigung ist ein Umgreifen oder die Benutzung der zweiten Hand nicht erforderlich. Der Benutzer kann während des laufenden Betriebes die Motorleistung und damit die Intensität des Gebläseluftstromes sowie den Massenstrom des Sprühmittels einstellen. Ohne Umgreifen kann erforderlichenfalls der Motor mittels des Stoppschalters auch abgestellt werden.

In bevorzugter Weiterbildung ist das Betätigungselement für das Steuerventil als Sprühtaster mit zumindest über einen Teilbereich seines Betätigungsweges selbsttätiger Rückstellung ausgebildet. Bevorzugt ist der Sprühtaster schwenkbar gelagert und bildet zusammen mit einem Übertragungsglied zum Steuerventil ein Kniegelenk, welches beim Überschreiten eines vorgegebenen Stellweges selbsttätig verriegelnd ausgeführt ist.

Hierdurch kann der Benutzer ohne Umgreifen vier verschiedene Funktionen steuern: Neben der Gaswahl und der Stoppfunktion kann mittels des Sprühtasters wahlweise ein kurzer Sprühstoß oder ein Dauersprühen eingestellt werden. Beim teilweisen Eindrücken des Sprühtasters wird kurzzeitig der Sprühmittelstrom freigegeben. Sofort nach Loslassen des Sprühtasters unterbricht die selbsttätige Rückstellung den Sprühmittelstrom. Das Sprühmittel kann stoßweise ausgebracht werden, indem der Sprühtaster nicht vollständig und nur kurz beispielsweise mit dem Daumen gedrückt wird. Sofern der Sprühtaster jedoch vollständig durchgedrückt wird, führt die Anordnung des Kniegelenkes beim Überschreiten des vorgegebenen Stellweges zu einer selbsttätigen Verriegelung. Das Sprühmittel wird als dauerhafter Massenstrom freigegeben, ohne dass der Benutzer den Sprühtaster dauerhaft drücken muss.

Das Steuerventil ist zweckmäßig als federbelastetes Linearventil ausgebildet, welches unter Zugbelastung öffnet, wobei das Übertragungsglied eine Zugstange ist. Die federvorgespannte Zugbelastung ermöglicht eine Ausbildung, die nahezu spielfrei und vergleichsweise starr ist. Der Sprühmittelstrom kann exakt dosiert werden. Die Federvorspannung des Linearventils in Richtung seiner geschlossenen Position kann gleichzeitig auch für die Rückstellung des Betätigungselementes bzw. des Sprühtasters herangezogen werden. Verriegelung, Entriegelung und Rückführung in die geschlossene Position der gesamten Steueranordnung erfolgt selbsttätig allein durch ein entsprechendes Federelement im Ventil. Bei hoher Stellgenauigkeit sind nur geringe Betätigungskräfte erforderlich.

In einer bevorzugten Ausbildung ist die Sprühmittelleitung durch den Handgriff hindurchgeführt, wobei das Steuerventil innerhalb des Handgriffs angeordnet ist. Das Übertragungsglied ist dabei vom Griffkopf durch den Griffbereich hindurch zum innenliegenden Steuerventil hindurchgeführt. Die Anordnung ist platzsparend. Das Steuerventil und das Übertragungsglied sind gegen äußere Einflüsse wie Verschmutzung und dgl. geschützt.

In bevorzugter Weiterbildung ist der Stoppschalter in Doppelfunktion auch ein Feststellelement für den Gashebel. Insbesondere ist der Stoppschalter als Schwenkhebel ausgebildet, der ausgehend von einer Neutralposition in eine Stopprichtung verschwenkbar ist und dabei einen Unterbrechungsschalter insbesondere in Form eines Mikroschalters betätigt, und der ausgehend von der Neutralposition in einer zur Stopprichtung entgegengesetzten Feststellrichtung verschwenkbar ist und dabei den Gashebel in einer Betriebsposition feststellt.

Trotz limitiertem Bauvolumen und der Anordnung von insgesamt nur drei Stellgliedern ist die Anzahl der vom Benutzer zu betätigenden Funktionen erweitert, ohne dass die Hand vom Handgriff genommen werden muss. Durch Schwenkung des Schwenkhebels in die Feststellrichtung wird der Gashebel in der Betriebsposition festgestellt. Der Gashebel kann losgelassen werden, während ein dauerhafter, zumindest näherungsweise konstanter Blasluftstrom gefördert wird. Drehzahlschwankungen des Motors und des Gebläses sind vermieden. Ein gleichbleibendes Verhältnis von Blasluftstrom zum Sprühmittelstrom ist im Dauerbetrieb sichergestellt. Der daraus resultierende optimale Verteilungsprozess trägt dazu bei, nicht mehr Sprühmittel als erforderlich zu verteilen.

Ohne weiteres Umgreifen kann mit der gleichen Hand der Schwenkhebel in entgegengesetzte Richtung verschwenkt werden. Die Feststellung des Gashebels wird aufgehoben und der Stoppschalter betätigt. Der Betrieb des Sprühgerätes kann punktgenau unterbrochen werden.

In bevorzugter Weiterbildung ist bei einer Betätigung des Schwenkhebels in der Feststellrichtung eine Kopplung derart zum Gashebel vorgesehen, dass mit zunehmendem Betätigungsweg des Schwenkhebels eine zunehmende Verschwenkung des Gashebels in Richtung seiner Vollgasposition erfolgt. Vorteilhaft ist zur Kopplung zwischen Schwenkhebel und Gashebel eine Kurvenscheibe oder ein Schlepphebel vorgesehen. Hierdurch ist es möglich, ohne Betätigung des Gashebels eine Leistungswahl des Verbrennungsmotors allein durch Betätigung des Schwenkhebels vorzunehmen. Mit nur einem Finger oder Daumen kann ohne umzugreifen und ohne Betätigung des Gashebels die gewünschte Motorleistung vorgewählt und für den Dauerbetrieb fest eingestellt werden. Die Kopplung zwischen Schwenkhebel und Gashebel über eine Kurvenscheibe oder einen Schlepphebel ermöglicht dennoch eine Betätigung des Gashebels unabhängig vom Schwenkhebel. Ohne Aufgabe des zuvor mittels des Schwenkhebels eingestellten Leistungsniveaus kann kurzzeitig mit dem Gashebel die Motorleistung angehoben werden. Nach Loslassen des Gashebels kehrt der Motor wieder in seine zuvor eingestellte und festgelegte Leistungseinstellung zurück.

In einer zweckmäßigen Ausführung ist der Stoppschalter mit einer Reibfeder verbunden, die auf einer insbesondere rampenförmigen Gleitbahn läuft. Bevorzugt ist die Reibfeder als etwa U-förmige Federklammer ausgebildet, die zwischen zwei bogenförmigen Gleitbahnen klemmend und gemeinsam mit dem Schwenkhebel schwenkend bewegbar ist. Die dadurch entstehende federvorbelastete Gleitreibung ermöglicht ein feinfühliges und stufenloses Einstellen des Stoppschalters bzw. des Schwenkhebels in Stopp-, Neutral- oder einer beliebigen Gasposition. Die Anordnung einer Rampe erleichtert das Auffinden der Neutralposition.

Der Handgriff umfaßt zweckmäßig zwei Halbschalen, die das Blasrohr lösbar umschließen, wobei die beiden Halbschalen klemmend am Blasrohr befestigt sind. Nach Lösen der Klemmverbindung kann der Handgriff zumindest innerhalb eines vorgegebenen Bereichs entlang des Blasrohres verschoben und in abweichender Position wieder befestigt werden. Die Anordnung aus Blasrohr und Handgriff kann hierdurch an die verschiedenen ergonomischen Verhältnisse unterschiedlicher Benutzer angepasst werden.

Ausführungsbeispiele der Erfindung sind im Folgenden anhand der Zeichnung näher beschrieben. Es zeigen:
- Fig. 1: in einer Seitenansicht ein erfindungsgemäß ausgeführtes, schematisch dargestelltes Sprühgerät mit einem Blasrohr und einer Sprühmittelleitung sowie mit einem Handgriff am Blasrohr, an dessen Griffkopf ein Gashebel, ein Stoppschalter und ein Betätigungselement zur Betätigung des Steuerventils für den Sprühmittelstrom angeordnet sind;
- Fig. 2: eine perspektivische Ansicht eines Ausführungsbeispiels des Handgriffs nach Fig. 1 mit Einzelheiten zur Anordnung der Steuerelemente am Griffkopf;
- Fig. 3: eine Längsschnittdarstellung durch den Handgriff nach Fig. 2 mit Einzelheiten des darin angeordneten, geschlossenen Steuerventils sowie mit einem Sprühtaster in Ruheposition;
- Fig. 4: die Anordnung nach Fig. 3 mit teilweise gedrücktem Sprühtaster und geöffnetem Steuerventil zur Erzeugung eines Sprühstoßes;
- Fig. 5: die Anordnung nach den Fig. 3 und 4 mit vollständig durchgedrücktem, kniehebelartig verriegeltem Sprühtaster für die Betriebsart des Dauersprühens;
- Fig. 6: die Anordnung nach Fig. 3 in Ruheposition mit weiteren Einzelheiten der Gasfeststellung und der Zündungsunterbrechung;
- Fig. 7: die Anordnung nach Fig. 6 bei festgestelltem Vollgas;
- Fig. 8: die Anordnung nach Fig. 6 bei Zündungsunterbrechung.

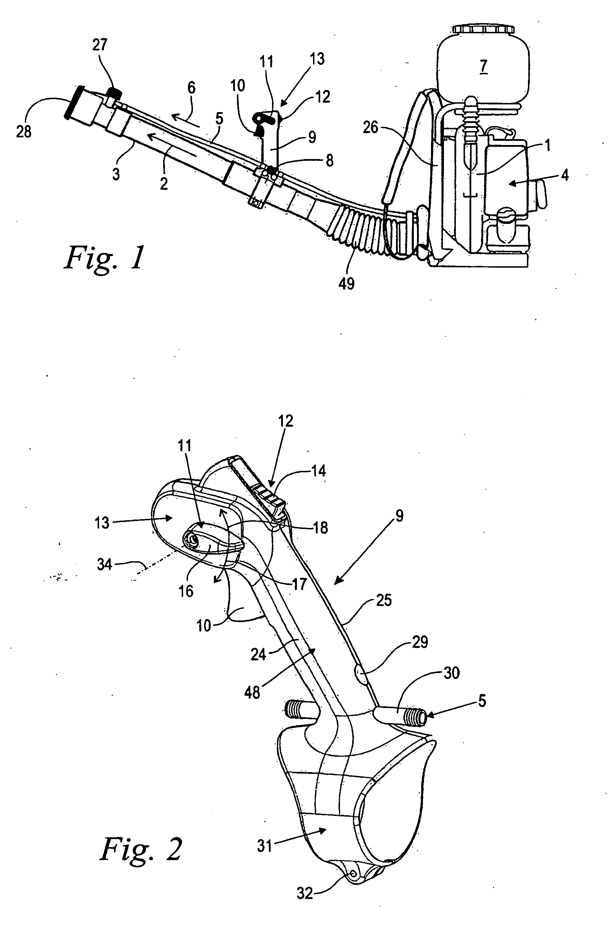

Fig. 1 zeigt in einer schematischen Seitenansicht ein tragbares Sprühgerät mit einem Rückentragegestell 26, an dem ein Gebläse 1, ein Verbrennungsmotor 4 und ein Vorratsbehälter 7 befestigt sind. Der Verbrennungsmotor 4 treibt das Gebläse 1 an, welches als Radialgebläse ausgeführt ist. Ein Blasrohr 3 ist mittels eines Faltenbalges 49 mit dem Gebläse 1 elastisch verbunden. Ein vom Gebläse 1 erzeugter und durch einen Pfeil 2 angedeuteter Blasluftstrom wird mittels des Blasrohres 3 zum gewünschten Einsatzort gelenkt. Aus dem Vorratsbehälter 7 führt eine Sprühmittelleitung 5 zu einer Düse 27, mittels derer die Sprühmittelleitung 5 in das Blasrohr 3 an dessen freien Ende 28 mündet. Von einer nicht dargestellten, durch den Verbrennungsmotor 4 angetriebenen Förderpumpe wird ein durch einen Pfeil 6 angedeuteter Sprühmittelstrom 6 erzeugt und ausgehend vom Vorratsbehälter 7 durch die Sprühmittelleitung 5 und die Düse 27 hindurch in den Blasluftstrom 2 eingeleitet. Der Sprühmittelstrom 6 wird ausgangsseitig der Düse 27 im Blasluftstrom 2 zerstäubt und gemeinsam mit dem Blasluftstrom 2 zum Einsatzort ausgetragen. Als Sprühmittel kommt insbesondere ein Pflanzenschutzmittel in Betracht, mit welchem Pflanzen besprüht werden.

Zum Starten des Verbrennungsmotors 4 wird das Sprühgerät auf dem Boden abgestellt. Im Bereich eines nicht dargestellten Vergasers des Verbrennungsmotors 4 sind eine auch als "Choke" bezeichnete Kaltstarteinrichtung und gegebenenfalls auch eine Entlüftungspumpe angeordnet. Des Weiteren befindet sich am Verbrennungsmotor 4 ein ebenfalls nicht dargestellter Seilzugstarter. Die vorgenannten Einrichtungen werden im abgestellten Zustand des Sprühgerätes betätigt.

Nachdem der Verbrennungsmotor 4 gestartet wurde, wird das Sprühgerät mittels des Rückentragegestells 26 auf dem Rücken der Bedienperson getragen. Am Blasrohr 3 ist ein Handgriff 9 befestigt, der mit der Hand des Benutzers ergriffen wird. Mittels des Handgriffes 9 kann der Benutzer das über dem Faltenbalg 49 elastisch aufgehängte Blasrohr 3 in die gewünschte Ausrichtung bringen. Während des rückengetragenen Betriebes stehen dem Benutzer insgesamt drei Bedienelemente zur Verfügung: Ein Gashebel 10 zur Leistungssteuerung des Verbrennungsmotors, ein Stoppschalter 11 zur Zündungsunterbrechung des Verbrennungsmotors sowie ein Betätigungselement 12 zur Betätigung eines Steuerventils 8, welches in der Sprühmittelleitung 5 angeordnet ist und zur Steuerung des Sprühmittelstroms 6 vorgesehen ist. Hierzu weist der Handgriff 9 an seinem freien, dem Blasrohr 3 abgewandten Ende einen Griffkopf 13 auf. An dem Griffkopf 13 sind der Gashebel 10, der Stoppschalter 11 und das Betätigungselement 12 für das Steuerventil 11 derart angeordnet, dass sie mit Daumen oder Finger derjenigen Hand betätigt werden können, die den Handgriff 9 umschließt, ohne dass der Handgriff 9 losgelassen werden muss.

Fig. 2 zeigt eine perspektivische Ansicht eines Ausführungsbeispiels des Handgriffes 9 nach Fig. 1. Der Handgriff 9 umfaßt zwei aus Kunststoff spritzgegossene, im Wesentlichen spiegelsymmetrisch zueinander ausgebildete Halbschalen 24, 25, die zusammen einen für das Umschließen mit der Hand vorgesehenen Griffbereich 48 den Griffkopf 13 sowie einen Befestigungsabschnitt 31 bilden. Auf der zum Griffbereich 48 gegenüberliegenden Unterseite des Befestigungsabschnitts 31 ist eine Verschraubung 32 vorgesehen. Im montierten Zustand umschließt der ringförmig ausgebildete Befestigungsabschnitt 31 das Blasrohr 3 (Fig. 1) und ist bei festgezogener Verschraubung 32 klemmend am Blasrohr 3 (Fig. 1) befestigt. Nach Lösen der Verschraubung 32 läßt die Klemmung so weit nach, dass der Handgriff 9 verschoben und an verschiedenen Positionen des Blasrohrs 3 (Fig. 1) fixiert werden kann.

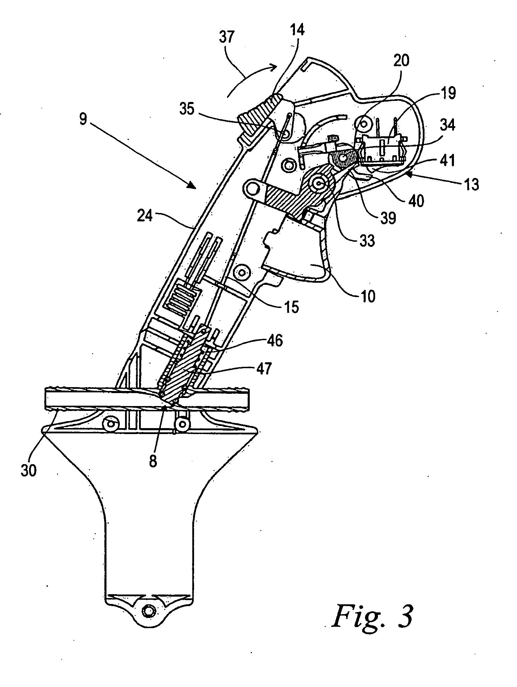

An das dem Befestigungsabschnitt 31 gegenüberliegende Ende des Griffbereichs 48 schließt sich der Griffkopf 13 an, der bezogen auf die in Fig. 1 gezeigte gewöhnliche Arbeitshaltung nach vorne und nach oben über den Griffbereich 48 hervorsteht. Der Griffkopf 13 ist in seinem Querschnitt gegenüber dem Griffbereich 48 vergrößert ausgebildet und nicht zur Umschließung mit der Hand vorgesehen. Im Bereich der Oberseite des Griffkopfs 13 ist angrenzend an den Griffbereich 48 das Betätigungselement 12 für das Steuerventil 8 (Fig. 1) angeordnet. Im gezeigten Ausführungsbeispiel ist das Steuerelement 12 als schwenkbar gelagerter Sprühtaster 14 ausgeführt, dessen Funktion weiter unten im Zusammenhang mit den Fig. 3 bis 5 näher beschrieben wird.

Bezogen auf eine Längsrichtung ausgehend vom Rückentragegestell 26 zum freien Ende 28 (Fig. 1) hin ist auf einer linken Seitenfläche des Griffkopfes 13 der Stoppschalter 11 angeordnet, der um eine quer zur vorgenannten Längsrichtung verlaufende Schwenkachse 34 schwenkbar gelagert ist. Bei Benutzung durch einen Rechtshänder ergibt sich aus der linksseitigen Anordnung des Stoppschalters 11 eine Betätigung mit dem Daumen, ohne dass die Hand vom Griffbereich 48 gelöst werden muss. Auch das Betätigungselement 12 am Griffkopf 13 ist derart nahe zum Griffbereich 48 auf dessen Oberseite angeordnet, dass es wahlweise mit dem Daumen oder einem Finger der Griffhand betätigt werden kann, ohne den Griffbereich 48 loszulassen.

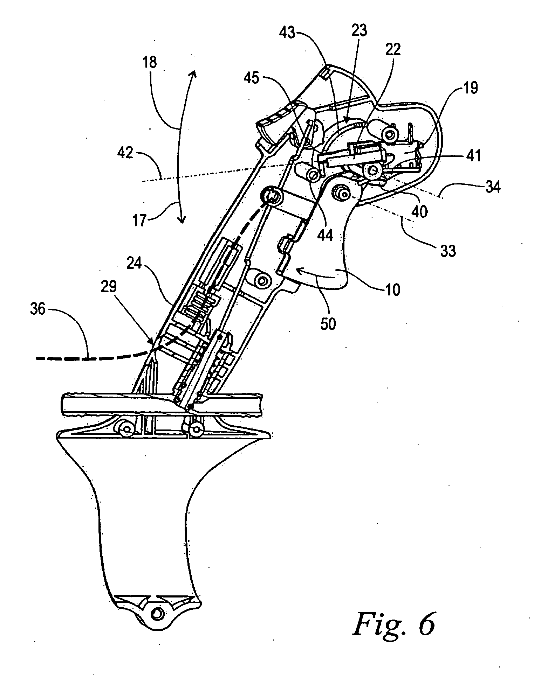

Auf der dem Betätigungselement 12 gegenüberliegenden, dem Blasrohr 3 (Fig. 1) zugewandten Unterseite des Griffkopfes 13 ist im Übergangsbereich zum Griffbereich 48 der schwenkbare Gashebel 10 angeordnet. Auch dieser kann ohne Umgreifen vom Griffbereich 48 mit den Fingern der Griffhand betätigt werden. Er wirkt auf einen weiter unten näher beschriebenen Gaszug 36 (Fig. 6) ein, der durch eine Durchführung 29 im Nahtbereich zwischen den beiden Halbschalen 24, 25 aus dem Inneren des Handgriffs 9 heraus in Richtung des Verbrennungsmotors 4 (Fig. 1) geführt ist.

Der Stoppschalter 11 ist als um die Schwenkachse 34 schwenkbar gelagerter Schwenkhebel 16 ausgebildet und ist in Doppelfunktion auch ein Feststellelement für den Gashebel 10. Hierzu kann der Schwenkhebel 16 wahlweise in eine Stopprichtung 17 für eine Zündungsunterbrechung und damit zum Abstellen des Verbrennungsmotors 4 (Fig. 1) oder entgegengesetzt in eine Feststellrichtung 18 zum Feststellen des Gashebels 10 und damit zur Feststellung der gewünschten Motorleistung im Betrieb verschwenkt werden. Einzelheiten hierzu sind weiter unten im Zusammenhang mit den Fig. 6 bis 8 näher erläutert.

Ein Teilstück der Sprühmittelleitung 5 ist als Rohrstutzen 30 ausgebildet, der achsparallel zum Blasrohr 3 (Fig. 1) nahe dem Befestigungsabschnitt 31 durch den Handgriff 9 hindurchgeführt ist. Der Längsschnittdarstellung nach Fig. 3 ist zu entnehmen, dass das Steuerventil 8 zur Steuerung des Sprühmittelstromes 6 (Fig. 1) einteilig mit dem Rohrstutzen 30 ausgebildet und als federbelastetes Linearventil ausgeführt ist. Hierzu umfaßt das Steuerventil 8 einen quer zur Längsachse des Rohrstutzens 30 und etwa parallel zur Längsachse des Handgriffs 9 längsverschiebbar geführten Ventilkörper 47, der mittels einer Druckfeder 46 in der gezeigten geschlossenen Position gehalten wird.

Der im Handgriff 9 um eine Schwenkachse 35 schwenkbar gelagerte Sprühtaster 14 ist in einer Ruheposition gezeigt, bei der das Steuerventil 8 geschlossen ist. Der Sprühtaster 14 ist mittels eines Übertragungsgliedes 15 mit dem Steuerventil 8 verbunden. Das Übertragungsglied 15 ist als Zugstange ausgeführt und am unteren Ende in den Ventilkörper 47 und am gegenüberliegenden oberen Ende in den Sprühtaster 14 eingehakt. Der Sprühtaster 14 steht teilweise über die Kontur des Handgriffs 9 hervor. Auf der dem hervorstehenden Teil gegenüberliegenden Seite ist das Übertragungsglied 15 in den Sprühtaster 14 eingehängt und verläuft auf dieser gegenüberliegenden Seite mit Abstand zur Schwenkachse 35. Hierdurch und unter Einwirkung der Druckfeder 46 ist der Sprühtaster 14 entgegen einer durch einen Pfeil 37 angegebenen und von der gezeigten Ruheposition ausgehenden Betätigungsrichtung 37 federvorgespannt.

Der Darstellung nach Fig. 3 ist noch zu entnehmen, dass der Gashebel 10 innerhalb des Handgriffs 9 im Griffkopf 13 um eine Schwenkachse 33 schwenkbar gelagert ist. Des Weiteren ist innerhalb des Griffkopfs 13 vom Handgriff 9 ein Unterbrechungsschalter 19 in Form eines Mikroschalters mit einem Schaltelement 41 angeordnet. Eine Kurvenscheibe 38 und ein Hebel 40 sind gemeinsam mit dem Schwenkhebel 16 (Fig. 2) um die Schwenkachse 34 schwenkbar und liegen ebenfalls innerhalb des Griffkopfes 13. Die Kurvenscheibe 38 wirkt auf eine Andruckfläche 39 des Gashebels 10, während der Hebel 40 auf das Schaltelement 41 des Unterbrechungsschalters 19 wirkt. Einzelheiten hierzu sind weiter unten im Zusammenhang mit den Fig. 6 bis 8 näher beschrieben.

Die Darstellung nach Fig. 3 zeigt die Innenansicht der Halbschale 24 des Handgriffs 9. Im montierten Zustand ist durch die spiegelsymmetrisch ausgebildete weitere Halbschale 25 (Fig. 2) ein innerer Hohlraum des Handgriffs 9 gebildet, innerhalb dessen das Steuerventil 8, der Unterbrechungsschalter 19 sowie die Lagerung des Sprühtasters 14, des Gashebels 10 und des Schwenkhebels 16 (Fig. 2) zusammen mit der Kurvenscheibe 38 und dem Hebel 40 angeordnet sind.

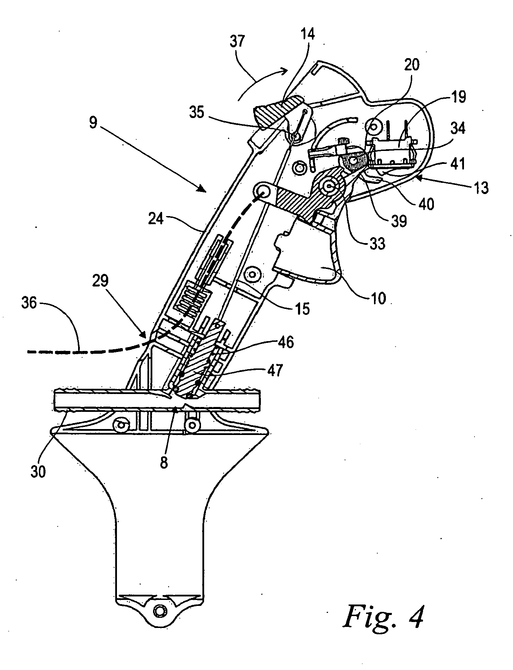

Fig. 4 zeigt die Anordnung nach Fig. 3 mit teilweise durchgedrücktem Sprühtaster 14. Gegenüber der Ausgangslage nach Fig. 3 ist der Sprühtaster 14 teilweise in der Betätigungsrichtung 37 gedrückt. Infolge seiner Schwenkbewegung wird mittels des als Zugstange ausgeführten Übertragungsgliedes 15 eine Zugkraft auf den Ventilkörper 47 gegen die Kraft der Druckfeder 46 ausgeübt. In der Folge erreicht der Ventilkörper 47 seine in Fig. 4 gezeigte geöffnete Position, in der der Querschnitt des Rohrstutzens 30 freigegeben ist. Es stellt sich ein Sprühmittelstrom 6 in der Sprühmittelleitung 5 (Fig. 1) ein.

Das unter Zugbelastung geöffnete Steuerventil 8 neigt unter Einwirkung der vorgespannten Druckfeder 46 dazu, dass sich der Ventilkörper 47 selbsttätig in die geschlossene Position nach Fig. 3 zurückstellt. Hierbei übt die Druckfeder 46 mittels des Ventilkörpers 47 eine Zugkraft auf das eingehängte Übertragungsglied 15 auf. In der teilweise durchgedrückten Position des Sprühtasters 14 nach Fig. 4 verläuft das Übertragungsglied 15 ebenso wie in der geschlossenen Position nach Fig. 3 auf der Außenseite der Schwenkachse 35, also zwischen der Schwenkachse 35 und dem nach außen hervorstehenden Teil des Sprühtasters 14. Unter Einwirkung der Zugbelastung ist demnach der Sprühtaster 14 entgegen seiner Betätigungsrichtung 37 vorgespannt und deshalb selbsttätig rückstellend. Ausgehend von der Ruheposition nach Fig. 3 führt ein kurzer, nicht vollständig durchgezogener Druck auf den Sprühtaster 14 dazu, dass die Position nach Fig. 4 erreicht wird. Die Zugspannung im Übertragungsglied 15 bewirkt, dass sich der Sprühtaster 14 und der Ventilkörper 47 sofort nach Loslassen in die geschlossene Ausgangsposition nach Fig. 3 zurückstellen. Durch kurzes Drücken des Sprühtasters 14 sind kurze Sprühstöße mit dem Sprühmittelstrom 6 (Fig. 1) möglich.

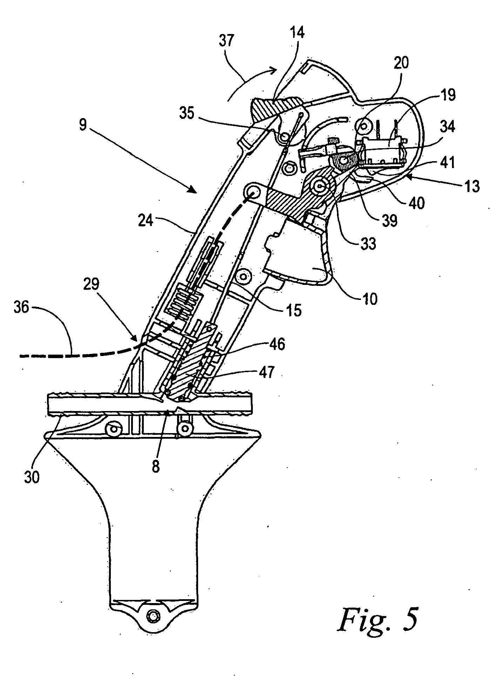

Aus der Darstellung nach Fig. 5 ergibt sich, dass der über einen Teilbereich seines Betätigungsweges gedrückte Sprühtaster 14 nach Fig. 4 noch weiter in seiner Betätigungsrichtung 37 durchgedrückt werden kann. Hierbei überstreicht das Übertragungsglied 15 entsprechend der Darstellung nach Fig. 5 die Schwenkachse 35. Das Übertragungsglied 15 verläuft demnach auf der Seite der Schwenkachse 35, die dem aus dem Handgriff 9 hervorstehenden Teil des Sprühtasters 14 abgewandt liegt. Hierbei bildet der Sprühtaster 14 zusammen mit dem Übertragungsglied 15 ein Kniegelenk. Das Kniegelenk ist beim Überschreiten des Stellweges ausgehend von der teilweise geöffneten Position nach Fig. 4 bis hin zur vollständig durchgedrückten Position nach Fig. 5 selbsttätig verriegelnd. Die Zugbelastung im Übertragungsglied 15 wirkt mit einem Hebelarm relativ zur Schwenkachse 35 derart auf den Sprühtaster 14, dass dieser dauerhaft in der Betätigungsrichtung 37 durchgedrückt gehalten wird. Dabei liegt auch der Ventilkörper 47 des Steuerventils 8 dauerhaft in der geöffneten Position. Es stellt sich ein dauerhafter, für das Dauersprühen vorgesehener Sprühmittelstrom 6 in der Sprühmittelleitung 5 (Fig. 1) ein.

Es kann auch eine Anordnung zweckmäßig sein, bei der die Betätigungsrichtung 37 umgekehrt liegt, wobei also der Sprühtaster 14 zum Öffnen des Steuerventils 8 nach unten zum Blasrohr 3 hin betätigt wird. In den übrigen Merkmalen und Bezugszeichen stimmen die Anordnungen nach den Fig. 3 bis 5 untereinander sowie mit den Ausführungen nach den Fig. 1 und 2 überein.

Weitere Steuerfunktionen am Handgriff 9 ergeben sich aus der Darstellung nach den Fig. 6 bis 8: Fig. 6 zeigt die Anordnung nach Fig. 3 in leicht perspektivischer Ansicht. Es ist zu erkennen, dass auf der Innenseite der Halbschale 24 eine kreisbogenförmig um die Schwenkachse 34 des Schwenkhebels 16 verlaufende Gleitbahn 23 angeordnet ist. Spiegelsymmetrisch dazu ist eine identische Gleitbahn in der gegenüberliegenden Halbschale 25 (Fig. 2) angeordnet. Zwischen den beiden einander zugewandten Flächen der Gleitbahnen 23 ist eine Reibfeder 22 unter Vorspannung eingeklemmt. Hierzu ist die Reibfeder 22 im gezeigten Ausführungsbeispiel als U-förmige Federklammer ausgeführt, deren beide Schenkel sich unter Federvorspannung in der Axialrichtung der Schwenkachse 34 nach außen aufspreizen und unter Vorspannung an den beiden Gleitbahnen 23 anliegen. Die Reibfeder 22 ist gemeinsam mit dem Schwenkhebel 16 (Fig. 2) um die Schwenkachse 34 verschwenkbar. Die drehfest mit dem Schwenkhebel 16 verbundene Reibfeder 22 liegt bezogen auf die Schwenkachse 34 etwa parallel zu einer Neutralposition 42, der auch die Neutralposition des Schwenkhebels 16 (Fig. 2) zugeordnet ist. Ausgehend von der Neutralposition 42 wird die Reibfeder 22 gemeinsam mit dem Schwenkhebel 16 (Fig. 2) wahlweise in der Stopprichtung 17 oder in der Feststellrichtung 18 verschwenkt.

Die Gleitbahn 23 weist im Bereich der Stopprichtung 17 einen schmaleren Abschnitt 44 und im Bereich der Feststellrichtung einen gegenüber dem Abschnitt 44 erweiterten Abschnitt 43 auf. Zwischen beiden verläuft eine Rampe 45, die sich in der Axialrichtung zur Schwenkachse 34 erhebt. Der seitliche Abstand zwischen den schmaleren Abschnitten 44 beider Gleitbahnen 43 ist größer als der seitliche Abstand zwischen den beiden erweiterten Abschnitten 43. Bei Betätigung des Schwenkhebels 16 in der Feststellrichtung 18 erzeugt die Federvorspannung der Reibfeder 22 eine Reibkraft an den erweiterten Abschnitten 43. Diese Reibkraft kann zwar manuell durch Betätigung des Schwenkhebels 16 (Fig. 2) überwunden werden, verhindert jedoch eine selbsttätige Verstellung.

Bei Verschwenkung des Schwenkhebels 16 (Fig. 2) in die Stopprichtung 17 liegen die Schenkel der Reibfeder 22 nur mit geringerer Vorspannkraft an den schmaleren Abschnitten 44 an. Auch die daraus resultierende Reibkraft kann zwar manuell überwunden werden, verhindert jedoch eine selbsttätige Verstellung des Schwenkhebels 16 (Fig. 2).

Die zwischenliegende Rampe 45 dient zum Ertasten der Neutralposition 42. Die sich an der Rampe 45 bei Verschwenkung sprunghaft ändernde Reibkraft kann vom Benutzer am Schwenkhebel 16 gefühlt werden und signalisiert das Auffinden der Neutralposition 42. In der Neutralposition 42 nach Fig. 6 ist der Schwenkhebel 16 (Fig. 2) ohne Funktion: Der Gashebel 10 und der Unterbrechungsschalter 19 sind unbeeinflusst. Der Hebel 40 liegt mit Abstand zum Schaltelement 41, wobei die Zündung des Verbrennungsmotors 4 eingeschaltet ist. Der Verbrennungsmotor 4 (Fig. 1) kann gestartet und in Betrieb genommen werden. Der Gashebel 10 kann ausgehend von seiner gezeigten Leerlaufposition in Richtung eines Pfeils 50 um seine Schwenkachse 33 in Richtung seiner Vollgasstellung durchgedrückt werden. Der Stellweg in Richtung des Pfeils 50 wird über einen schematisch angedeuteten, von innen durch die Durchführung 29 nach außen herausgeführten Gaszug 36 auf den Vergaser des Verbrennungsmotors 4 (Fig. 1) übertragen. Nach Loslassen des Gashebels 10 zieht eine nicht dargestellte Rückstellfeder des Vergasers vom Verbrennungsmotor 4 (Fig. 1) den Gashebel 10 zurück in seine Standgasstellung nach Fig. 6.

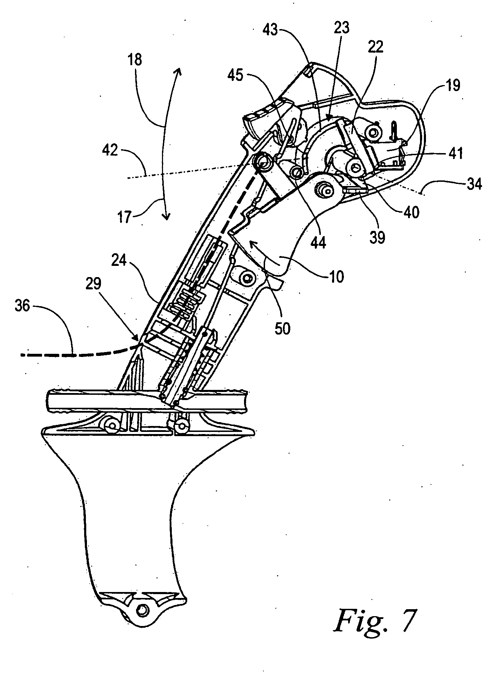

Fig. 7 zeigt die Anordnung nach Fig. 6 mit in der Feststellrichtung 18 verschwenktem Schwenkhebel 16 (Fig. 2). Dementsprechend ist auch die Reibfeder 22 in der Feststellrichtung 18 um das gleiche Maß verschwenkt und hält durch seine Reibkraft am erweiterten Abschnitt 43 den Schwenkhebel 16 (Fig. 2) in Vollgasposition. Die Schwenkbewegung des Schwenkhebels 16 (Fig. 2) wird mittels eines in den Fig. 3 bis 5 dargestellten Nockens 20 auf eine Andruckfläche 39 des Gashebels 10 übertragen, wodurch auch der Gashebel 10 in Vollgasstellung liegt. Diese Vollgasstellung wird mittels des Gaszuges 36 auf den Vergaser des Verbrennungsmotors 4 (Fig. 1) übertragen.

Zwischen der Leerlaufposition nach Fig. 6 und der Vollgasposition nach Fig. 7 sind verschiedene Zwischenpositionen mittels des Schwenkhebels 16 (Fig. 2) einstellbar. Der Gashebel 10 ist dementsprechend in einer beliebigen Betriebsposition festgestellt und gibt die gewünschte Motorleistung für den Dauerbetrieb des Sprühgerätes vor.

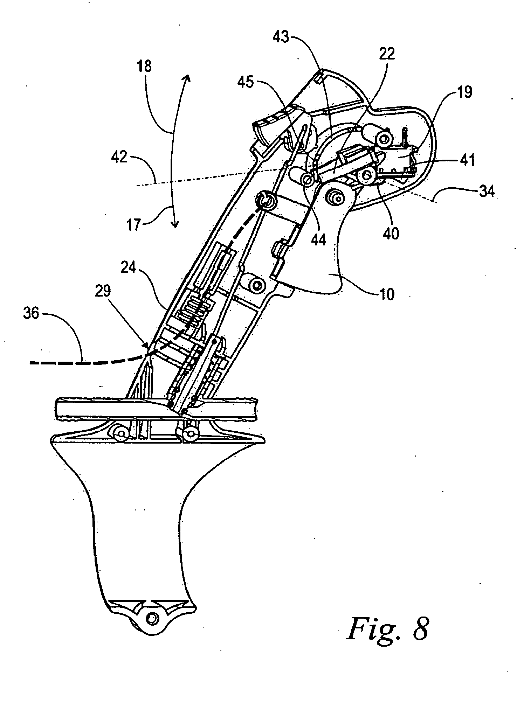

Durch Schwenken des Schwenkhebels 16 entgegen der Feststellrichtung 18 wird ausgehend von der Betriebsposition nach Fig. 7 zunächst die Neutralposition 42 nach Fig. 6 erreicht. Durch weiteres Verschwenken in der Stopprichtung 17 (Fig. 8) hebt der Nocken 20 (Fig. 3) von der Andruckfläche 39 ab. Die Stellung des Gashebels 10 bleibt unbeeinflusst. Beim Durchdrücken des Schwenkhebels 16 (Fig. 2) in der Stopprichtung 17 drückt jedoch der gemeinsam damit verschwenkte Hebel 40 auf das Schaltelement 41 des Unterbrechungsschalters 19 (Fig. 8). Die Zündung des Verbrennungsmotors 4 (Fig. 1) wird unterbrochen und der Verbrennungsmotor 4 damit abgeschaltet. Ausgehend von der abgeschalteten Position nach Fig. 8 kann der Schwenkhebel 16 (Fig. 2) entgegen der Stopprichtung 17 wieder zurück zur Neutralposition 42 verschwenkt werden. Das Schaltelement 41 des Unterbrechungsschalters 19 kehrt wieder in seine Betriebsposition nach Fig. 6 zurück. Der Verbrennungsmotor 4 (Fig. 1) kann wieder in Betrieb genommen werden.

In den übrigen Merkmalen und Bezugszeichen stimmt die Anordnung nach den Fig. 6 bis 8 mit derjenigen nach den Fig. 1 bis 5 überein.

## Patentansprüche

1. Tragbares Sprühgerät mit einem Gebläse (1) zur Förderung eines Blasluftstromes (2) durch ein Blasrohr (3), mit einem Verbrennungsmotor (4) zum Antrieb des Gebläses (1), mit einer Sprühmittelleitung (5) zur Führung eines Sprühmittelstromes (6) aus einem Vorratsbehälter (7) in den Blasluftstrom (2), wobei in der Sprühmittelleitung (5) ein Steuerventil (8) zur Steuerung des Sprühmittelstromes (6) angeordnet ist, mit einem Handgriff (9), mit einem Gashebel (10) zur Leistungssteuerung des Verbrennungsmotors (4), mit einem Stoppschalter (11) zur Zündungsunterbrechung des Verbrennungsmotors (4) und mit einem Betätigungselement (12) zur Betätigung des Steuerventils (8) für den Sprühmittelstrom (6),
**dadurch gekennzeichnet, dass** der Handgriff (9) einen Griffkopf (13) aufweist, in dem der Gashebel (10), der Stoppschalter (11) und das Betätigungselement (12) für das Steuerventil (8) angeordnet sind.

2. Sprühgerät nach Anspruch 1,
**dadurch gekennzeichnet, dass** der Handgriff (9) am Blasrohr (3) befestigt ist.

3. Sprühgerät nach Anspruch 1 oder 2,
**dadurch gekennzeichnet, dass** das Betätigungselement (12) für das Steuerventil (8) als Sprühtaster (14) mit zumindest über einen Teilbereich seines Betätigungsweges selbsttätiger Rückstellung ausgebildet ist.

4. Sprühgerät nach Anspruch 3,
**dadurch gekennzeichnet, dass** der Sprühtaster (14) schwenkbar gelagert ist und zusammen mit einem Übertragungsglied (15) zum Steuerventil (8) ein Kniegelenk bildet, welches beim Überschreiten eines vorgegebenen Stellweges selbsttätig verriegelnd ausgeführt ist.

5. Sprühgerät nach einem der Ansprüche 1 bis 4,
**dadurch gekennzeichnet, dass** das Steuerventil (8) ein federbelastetes Linearventil ist, welches unter Zugbelastung öffnet, wobei das Übertragungsglied (15) eine Zugstange ist.

6. Sprühgerät nach einem der Ansprüche 1 bis 5,
**dadurch gekennzeichnet, dass** die Sprühmittelleitung (5) durch den Handgriff (9) hindurchgeführt ist, wobei das Steuerventil (8) innerhalb des Handgriffs (9) angeordnet ist.

7. Sprühgerät nach einem der Ansprüche 1 bis 6,
**dadurch gekennzeichnet, dass** der Stoppschalter (11) in Doppelfunktion auch ein Feststellelement für den Gashebel (10) ist.

8. Sprühgerät nach Anspruch 7,
**dadurch gekennzeichnet, dass** der Stoppschalter (11) als Schwenkhebel (16) ausgebildet ist, der ausgehend von einer Neutralposition (42) in eine Stopprichtung (17) verschwenkbar ist und dabei einen Unterbrechungsschalter (19) insbesondere in Form eines Mikroschalters betätigt, und der ausgehend von der Neutralposition (42) in einer zur Stopprichtung (17) entgegengesetzten Feststellrichtung (18) verschwenkbar ist und dabei den Gashebel (10) in einer Betriebsposition feststellt.

9. Sprühgerät nach Anspruch 8,
**dadurch gekennzeichnet, dass** bei einer Betätigung des Schwenkhebels (16) in der Feststellrichtung (18) eine Kopplung derart zum Gashebel (10) vorgesehen ist, dass mit zunehmendem Betätigungsweg des Schwenkhebels (16) eine zunehmende Verschwenkung des Gashebels (10) in Richtung seiner Vollgasposition erfolgt.

10. Sprühgerät nach Anspruch 9,
**dadurch gekennzeichnet, dass** zur Kopplung zwischen Schwenkhebel (16) und Gashebel (10) eine Kurvenscheibe (20) oder ein Schlepphebel (21) vorgesehen ist.

11. Sprühgerät nach einem der Ansprüche 7 bis 10,
**dadurch gekennzeichnet, dass** der Stoppschalter (11) mit einer Reibfeder (22) verbunden ist, die auf einer insbesondere rampenförmigen Gleitbahn (23) läuft.

12. Sprühgerät nach Anspruch 11,
**dadurch gekennzeichnet, dass** die Reibfeder (22) als etwa U-förmige Federklammer ausgebildet ist, die zwischen zwei bogenförmigen Gleitbahnen (23) klemmend und gemeinsam mit dem Schwenkhebel (16) schwenkend bewegbar ist.

13. Sprühgerät nach einem der Ansprüche 1 bis 12,
**dadurch gekennzeichnet, dass** der Handgriff (9) zwei Halbschalen (24, 25) umfasst, die das Blasrohr (3) lösbar umschließen, wobei die beiden Halbschalen (24, 25) klemmend am Blasrohr (3) befestigt sind.

## Claims

1. Portable spray device with a fan (1) for conveying a compressed air flow (2) through a blow pipe (3), with an internal combustion engine (4) for driving the fan (1), with a spray material line (5) for guiding a spray material flow (6) from a reservoir (7) into the compressed air flow (2), wherein a control valve (8) for the control of the spray material flow (6) is provided in the spray material line (5), with a handle (9), with a throttle lever (10) for controlling the power of the internal combustion engine (4), with a stop switch for interrupting the ignition of the internal combustion engine (4) and with an actuating element for actuating the control valve (8) for the spray material flow (6),
**characterised in that** the handle (9) comprises a knob (13) wherein the throttle lever (10), the stop switch (11) and the actuating element (12) for the control valve (8) are located.

2. Spray device according to claim 1,
**characterised in that** the handle (9) is secured to the blow pipe (3).

3. Spray device according to claim 1 or 2,
**characterised in that** the actuating element (12) for the control valve (8) is designed as a spray button (14) with automatic reset over at least a section of its actuating distance.

4. Spray device according to claim 3,
**characterised in that** the spray button (14) is pivoted and, together with a transmission member (15) to the control valve (8), forms a toggle designed for automatic locking if a preset actuating distance is exceeded.

5. Spray device according to any of claims 1 to 4,
**characterised in that** the control valve (8) is a spring-loaded linear valve opening under tensile load, the transmission member (15) being a tie rod.

6. Spray device according to any of claims 1 to 5,
**characterised in that** the spray material line (5) is routed through the handle (9), the control valve (8) being located within the handle (9).

7. Spray device according to any of claims 1 to 6,
**characterised in that** the stop switch (11) has a dual function as a locking element for the throttle lever (10).

8. Spray device according to claim 7,
**characterised in that** the stop switch (11) is designed as a pivoted lever (16) capable of pivoting from a neutral position (42) in a stop direction (17) while operating an interrupt switch (19) designed in particular as a micro-switch, and capable of pivoting from the neutral position (42) in a locking direction (18) which is opposite the stop direction (17) while locking the throttle lever (10) in an operating position.

9. Spray device according to claim 8,
**characterised in that**, if the pivoted lever (16) is operated in the locking direction (18), a coupling to the throttle lever (10) is provided such an increased actuating distance of the pivoted lever (16) is accompanied by an increased pivoting of the throttle lever (10) towards its full throttle position.

10. Spray device according to claim 9,
**characterised in that** a cam disc (20) or cam follower (21) is provided for a coupling-between the pivoted lever (16) and the throttle lever (10).

11. Spray device according to any of claims 7 to 10,
**characterised in that** the stop switch (11) is connected to a friction spring (22) running on an in particular ramp-shaped slideway (23).

12. Spray device according to claim 11,
**characterised in that** the friction spring (22) is designed as an approximately U-shaped spring clip clamping between two curved slideways (23) and pivotable together with the pivoted lever (16).

13. Spray device according to any of claims 1 to 12,
**characterised in that** the handle (9) comprises two half-shells (24, 25) which releasably enclose the blow pipe (3), wherein the two half-shells (24, 25) are clamped to the blow pipe (3).

## Revendications

1. Pulvérisateur portable comprenant une soufflante (1) destinée à amener un courant d'air de soufflage (2) à travers un tube de soufflage (3), comprenant un moteur à combustion interne (4) destiné à entraîner la soufflante (1), comprenant une conduite d'agent à pulvériser (5) destinée à guider un courant d'agent à pulvériser (6) d'un récipient de stockage (7) dans le courant d'air de soufflage (2), une soupape de commande (8) destinée à commander le courant d'agent à pulvériser (6) étant disposée dans la conduite d'agent à pulvériser (5), comprenant une poignée (9), comprenant un levier d'accélérateur (10) pour la commande de puissance du moteur à combustion interne (4), comprenant un commutateur d'arrêt (11) destiné à interrompre l'allumage du moteur à combustion interne (4) et comprenant un élément d'actionnement (12) destiné à actionner la soupape de commande (8) pour le courant d'agent à pulvériser (6), **caractérisé en ce que** la poignée (9) comprend une tête de saisie (13) dans laquelle sont disposés le levier d'accélérateur (10), le commutateur d'arrêt (11) et l'élément d'actionnement (12) pour la soupape de commande (8).

2. Appareil de pulvérisation selon la revendication 1, **caractérisé en ce que** la poignée (9) est fixée sur le tube de soufflage (3).

3. Appareil de pulvérisation selon la revendication 1 ou 2, **caractérisé en ce que** l'élément d'actionnement (12) pour la soupape de commande (8) est conçu comme un bouton de pulvérisation (14) comprenant au moins une position de rappel automatique au-dessus d'une zone partielle de son trajet d'actionnement.

4. Appareil de pulvérisation selon la revendication 3, **caractérisé en ce que** le bouton de pulvérisation (14) est monté pivotant et forme conjointement avec un organe de transmission (15) par rapport à la soupape de commande (8) une genouillère, laquelle est conçue de manière à se verrouiller automatiquement lorsqu'un parcours de réglage prédéfini est dépassé.

5. Appareil de pulvérisation selon l'une quelconque des revendications 1 à 4, **caractérisé en ce que** la soupape de commande (8) est une soupape linéaire sollicitée par un ressort, laquelle s'ouvre sous l'effet d'une contrainte de traction, l'organe de transmission (15) étant une bielle de traction.

6. Appareil de pulvérisation selon l'une quelconque des revendications 1 à 5, **caractérisé en ce que** la conduite d'agent à pulvériser (5) est guidée à travers la poignée (9), la soupape de commande (8) étant disposée à l'intérieur de la poignée (9).

7. Appareil de pulvérisation selon l'une quelconque des revendications 1 à 6, **caractérisé en ce que** le commutateur d'arrêt (11) en double fonction est également un élément de blocage pour le levier d'accélérateur (10).

8. Appareil de pulvérisation selon la revendication 7, **caractérisé en ce que** le commutateur d'arrêt (11) est conçu comme un levier pivotant (16), qui peut pivoter en partant d'une position neutre (42) dans une direction d'arrêt (17) et actionne dans ce cas un commutateur d'interruption (19), en particulier sous forme d'un micro-commutateur, et qui en partant de la position neutre (42) peut pivoter dans une direction de blocage (18) opposée à la direction d'arrêt (17) et bloque dans ce cas le levier d'accélérateur (10) dans une position opérationnelle.

9. Appareil de pulvérisation selon la revendication 8, **caractérisé en ce que** lors d'un actionnement du levier pivotant (16) dans la direction de blocage (18), il est prévu un accouplement par rapport au levier d'accélérateur (10) de telle sorte que plus le trajet d'actionnement du levier pivotant (16) augmente, plus le pivotement du levier d'accélérateur (10) en direction de sa position de plein régime augmente.

10. Appareil de pulvérisation selon la revendication 9, **caractérisé en ce qu'**une came (20) ou un levier d'entraînement (21) est prévu(e) pour l'accouplement entre le levier pivotant (16) et le levier d'accélérateur (10).

11. Appareil de pulvérisation selon l'une quelconque des revendications 7 à 10, **caractérisé en ce que** le commutateur d'arrêt (11) est relié à un ressort de friction (22), qui circule sur une surface de guidage (23), en particulier en forme de rampe.

12. Appareil de pulvérisation selon la revendication 11, **caractérisé en ce que** le ressort de friction (22) est conçu comme un collier à ressort à peu près en forme de U, qui est mobile de manière à être serré entre deux surfaces de guidage (23) en forme d'arc et à pivoter conjointement avec le levier pivotant (16).

13. Appareil de pulvérisation selon l'une quelconque des revendications 1 à 12, **caractérisé en ce que** la poignée (9) comporte deux demi-coques (24, 25) qui entourent de manière amovible le tube de soufflage (3), les deux demi-coques (24, 25) étant fixées par serrage sur le tube de soufflage (3).
